# EUROPÄISCHE PATENTANMELDUNG

(11) **EP 0 832 894 A2**
(43) Veröffentlichungstag der Anmeldung: **01.04.1998**
(21) Anmeldenummer: 97115688.0
(22) Anmeldetag: 10.09.1997
(51) Int. Cl.: C07F 5/02, C07F 5/00

(54) **Verfahren zur Herstellung von Dimethylaminboran**

(30) Priorität: 25.09.1996 DE 19639359
(71) Anmelder: BAYER AG, 51368 Leverkusen (DE)
(72) Erfinder: Holzner, Christoph, Dr., 51061 Köln (DE); Bertram, Horst, Dr., 51107 Köln (DE); Block, Hans-Dieter, Dr., 51381 Leverkusen (DE); Mitschke, Karl-Heinz, Dr., 51519 Odenthal (DE); Menzel, Stefan, 40878 Ratingen (DE)

(57) **Zusammenfassung**

Die vorliegende Erfindung betrifft ein Verfahren zur Herstellung von Dimethylaminboran durch Umsetzung von Natriumboranat mit einem Dimethylammoniumsalz in Monoethylenglykoldimethylether als Lösungsmittel.

## Beschreibung

Die vorliegende Erfindung betrifft ein Verfahren zur Herstellung von Dimethylaminboran durch Umsetzung von Natriumboranat mit einem Dimethylammoniumsalz in Monoethylenglykoldimethylether als Lösungsmittel.

Dimethylaminboran [(CH₃)₂NHBH₃], im folgenden mit DMAB bezeichznet, wird in der Technik hauptsächlich als Reduktionsmittel bei der Leiterplattenfertigung eingesetzt. Es wird dabei in Form einer wäßrigen Lösung verwendet, die infolge der hohen Qualitätsanforderungen an elektronische Bauteile keine unlöslichen Feststoffanteile enthalten darf.

DMAB kann aus den in technischen Mengen verfügbaren Rohstoffen Natriumboranat und Dimethylammoniumsalz hergestellt werden. Das dabei verwendete Lösungsmittel spielt bei der chemischen Umsetzung eine entscheidende Rolle. Es soll ausreichende Mengen der beiden Rohstoffe lösen, um überhaupt eine Reaktion zu ermöglichen und es soll nach der Reaktion vom entstandenen DMAB leicht abtrennbar sein und darf keine unerwünschten Nebenreaktionen ergeben.

Y. Kikugawa berichtet in Chem. Pharm Bull., Vol. 35, No. 12, (1987) auf den Seiten 4988 bis 4989 von seinen Bemühungen, ein geeignetes Lösungsmittel zu finden. Unter den getesteten Lösungsmitteln Tetrahydrofuran, Dioxan, Dimethylformamid und Monoethylenlykoldimethylether identifizierte er Monoethylenglykoldimethylether als am besten geeignet, weil dieser Ether die Rohstoffe am besten löst und anschließend durch Destillation leicht entfernbar ist. Es wird die Umsetzung von 25 mmol Natriumboranat mit 27,5 mmol Dimethylammoniumchlorid in 40 ml Monoethylenglykoldimethylether, im folgenden als Monoglyme bezeichnet, beschrieben. Das Reaktionsgemisch wird im Anschluß an die chemische Reaktion filtriert. Das dabei erhaltene Filtrat wird eingedampft, wobei im Destillationssumpf DMAB zurückbleibt. Dieses DMAB ist jedoch nicht besonders rein und entspricht nicht den hohen Qualitätsanforderungen. Daher wurde dieses "unreine" DMAB von Kikugawa in einem zusätzlichen Reinigungsschritt (Umkristallisation aus Dichlormethan/Hexan) von Verunreinigungen befreit. Bedingt durch diese zusätzlichen Schritte ist die Ausbeute nicht besonders gut. Desweiteren ist nachteilig, das die Umkristallisation bei der technischen Realisierung sehr kostenintensiv wird. Weiterhin ungünstig ist das große Lösungsmittelvolumen während der chemischen Reaktion. Dadurch wird die Raum-Zeit-Ausbeute des Verfahrens auf zu niedrige Werte begrenzt. Ein weiterer Nachteil des Verfahrens ist die aufwendige Lösungsmittelrückgewinnung. Durch einfache Destillation des Filtrats werden nur 80 % des eingesetzten Monoglymes zurückgewonnen.

Ein weiteres Herstellverfahren für DMAB (DE-A 4 411 752) setzt zur Umsetzung eines Dimethylammoniumsalzes mit einem Boranat flüssiges Dimethylamin im Gemisch mit einem zweiten Lösungsmittel als Reaktionsmedium ein. Dimethylamin und das zweite Lösungsmittel werden getrennt zum Reaktionsgemisch zugegeben. Vor deren Wiedereinsatz in die DMAB-Synthese müssen die beiden Lösemittel voneinander getrennt werden. Eine solche Lösemitteltrennung ist kostspielig und ist ein deutlicher Verfahrensnachteil.

Aufgabe war es daher, ein technisch leicht umsetzbares Verfahren zur Herstellung von DMAB zur Verfügung zu stellen, welches DMAB in hoher Reinheit und in guten Ausbeuten liefert und gleichzeitig auf kostspielige Trennoperationen, wie Umkristallisation oder Lösungsmittelrektifikation, verzichtet.

Diese Aufgabe konnte durch das erfindungsgemäße Verfahren gelöst werden.

Gegenstand der Erfindung ist ein Verfahren zur Herstellung von Dimethylaminboran (DMAB) durch Umsetzung von Natriumboranat mit einem Dimethylammoniumsalz in Monoethylenglykoldimethylether (Monoglyme) als Lösungsmittel, welches dadurch gekennzeichnet ist, daß das Monoglyme nach der Umsetzung aus dem Reaktionsgemisch vollständig abdestilliert und ohne weitere Behandlung wieder eingesetzt wird, der Destillationsrückstand mit Wasser und einem wasserunlöslichen, organischen Extraktionsmittel oder Extraktionsmittelgemisch aufgenommen und vermischt wird, die organische Phase anschließend von der wäßrigen Phase getrennt und eingedampft wird, wobei als Rückstand sehr reines DMAB und als Destillat ein wiedereinsetzbares Extraktionsmittel oder Extraktionsmittelgemisch erhalten werden.

Besonders geeignete Dimethylammoniumsalze sind Dimethylammoniumacetat und Dimethylammoniumchlorid, wobei das Dimethylammoniumchlorid besonders bevorzugt ist.

Das Dimethylammoniumsalz kann in fester Form dem Reaktionsgemisch zugegeben werden. Es kann aber auch vor der Zugabe von Natriumboranat durch Vereinigung stöchiometrischer Mengen an Dimethylamin und wasserfreier Säure in Monoglyme als Lösungsmittel hergestellt werden.

Die Umsetzung von Nathumboranat mit dem Dimethylammoniumsalz in Monoglyme als Lösungsmittel wird bevorzugt bei einer Temperatur von 20 bis 60°C durchgeführt.

Die Zugabezeit für das Natriumboranat kann in einem weiten Bereich, von wenigen Minuten bis mehreren Stunden, variiert werden.

Die Menge an einzusetzendem Monoglyme beträgt vorzugsweise zwischen 300 und 1000 ml pro mol Natriumboranat.

Geringe Mengen Wasser beschleunigen die Umsetzung zusätzlich und führen zu höheren DMAB-Ausbeuten. Das Reaktionsgemisch kann bis zu 1 mol Wasser pro mol Boranat enthalten. Bezogen auf die Monoglymemenge von 300 bis 1000 ml pro mol Boranat entspricht die maximale Wassermenge einem Wassergehalt des eingesetzten Monoglymes von 2 bis 7 Massenprozenten. Dabei kann das Wasser schon vor der Reaktion im Monoglyme enthalten sein. Es kann aber auch erst nach der Zugabe der beiden Reaktionspartner Nathumboranat und Dimethylammoniumsalz zur Vervollständigung der Reaktion zugegeben werden. Bevorzugt werden 0,001 bis 1 mol, besonders bevorzugt 0,01 bis 0,5 mol Wasser pro mol Natriumboranat zugesetzt.

Das Monoglyme wird nach beendeter Reaktion (erkennbar am Ausbleiben der Wasserstoffentwicklung) vorzugsweise im Vakuum abdestilliert. Es wird dabei nahezu vollständig zurückgewonnen und kann ohne weitere Reinigungsschritte im nächsten Reaktionsansatz wiederverwendet werden. Eine Anreicherung von Wasser im Monoglyme über eine Konzentration von 2 Massenprozenten hinaus wird auch nach mehreren Reaktionszyklen nicht beobachtet.

Der Destillationsrückstand wird mit einem Extraktionsmittel/Extraktionsmittelgemisch und mit Wasser versetzt. Pro mol Boranat werden bevorzugt 150 bis 300 ml Wasser eingesetzt und etwa das 2,5-fache Volumen an Extraktionsmittel/Extraktionsmittelgemisch.

Das Extraktionsmittel stammt vorzugsweise aus der Gruppe der aromatischen oder halogenierten Kohlenwasserstoffe, der Ether oder der Carbonsäureester. Als Beispiele aus diesen Substanzklassen seien genannt Toluol, Methylenchlorid, Diisopropylether und Butylacetat.

Statt eines reinen Extraktionsmittels kann aber auch ein Extraktionsmittelgemisch verwendet werden, wobei die erste Komponente dieses Gemischs bevorzugt aus den bereits genannten Substanzklassen der aromatischen oder halogenierten Kohlenwasserstoffe, der Ether oder Carbonsäureester entstammt und die zweite Komponente eine weitere organische Flüssigkeit, bevorzugt Monoglyme ist. Der Gehalt an Monoglyme in dem Extraktionsmittelgemisch beträgt bevorzugt bis zu 20 Massenprozente.

Extraktionsmittel oder Extraktionsmittelgemisch nehmen die überwiegende Menge des bei der Reaktion gebildeten DMAB auf, während die anorganischen Salze in der wäßrigen Phase gelöst bleiben. Nach der Phasentrennung kann die wäßrige Phase erneut einer Extraktion unterzogen werden, um letzte Reste an DMAB aus der wäßrigen Phase zu gewinnen. Die Extraktion wird bevorzugt als Gegenstromverfahren durchgeführt.

Nach der Phasentrennung wird die organische Phase vorzugsweise im Vakuum destilliert.

Als Destillat wird das Extraktionsmittel oder das Extraktionsmittelgemisch erhalten, welches ohne weitere Reinigung im nächsten Ansatz wiederverwendet werden kann. Eine destillative Trennung des Extraktionsmittelgemischs in seine Einzelkomponenten ist nicht notwendig.

Der Destillationsrückstand besteht aus DMAB hoher Reinheit.

Selbstverständlich kann das Verfahren zur Herstellung von DMAB auch auf die Herstellung anderer Aminborane übertragen werden, wobei als Amin im Aminboran primäre, sekundäre und tertiäre Amine vorliegen können. Diese Amine können acyclische, cyclische, bicyclische und polycyclische Substituenten aufweisen, wobei die drei letztgenannten Gruppen sowohl isocyclische als auch heterocyclische Substituenten einschließen. Das Stickstoffatom des Amins selbst kann auch als Ringatom einer cyclischen, bicyclischen oder polycyclischen Verbindung auftreten, wobei als weitere Ringatome neben Kohlenstoff auch andere Elemente wie Sauerstoff oder Schwefel in Frage kommen. Zur Herstellung dieser Aminborane wird anstelle des Dimethylammoniumsalzes das entsprechende Aminsalz mit Natriumboranat in Monoglyme zur Umsetzung gebracht und wie oben beschrieben weiter aufgearbeitet.

Die Erfindung soll anhand der nachfolgenden Beispiele näher erläutert werden.

### Beispiel 1

In einem 2 l Rundkolben, versehen mit Rührvorrichtung, Intensiv-Rückflußkühler (Kühlmitteltemperatur -15°C) und Feststofftrichter mit Förderschnecke, wurden 81,5 g (1 mol) Dimethylammoniumchlorid in 700 ml Monoglyme suspendiert. Über den Feststofftrichter wurden gleichmäßig über einen Zeitraum von 175 min 38 g (1 mol) Nathumboranat zugegeben. Der Temperaturmittelwert lag während der Boranatzugabe in der ersten Stunde bei 24,5°C, in der zweiten Stunde bei 25,5°C, in der dritten Stunde bei 26°C. Temperaturunter- und -obergrenze waren 21 und 27°C. Während der Boranatzugabe mußte nur zweimal kurz gekühlt werden.

Nach 175 min wurden im Feststofftrichter zurückgebliebene Boranatreste mit 10 ml Monoglyme in den Reaktionskolben gespült. Es wurde noch 5 min bei 26°C nachgerührt.

Das Monoglyme wurde direkt aus dem Reaktionskolben nach Aufsetzen eines Liebigkühlers bis zu einer Maximaltemperatur im Sumpf von 50°C sowie bis zu einem Enddruck von 20 mbar abdestilliert. Die Endwerte von Temperatur und Druck wurden 15 min lang gehalten. Das abdestillierende Monoglyme wurde in einer Trockeneis-gekühlten Vorlage gesammelt. Es wurden 700 ml rückgewonnenes Monoglyme, entsprechend einem Rückgewinnungsgrad von 98,6 % der Theorie, erhalten.

In den abgekühlten Rückstand wurden unter Rühren 400 ml Toluol gegeben. Anschließend wurden zunächst langsam und tropfenweise später schnell insgesamt 200 ml Wasser zugegeben. Es wurde 5 min lang gerührt. Die Phasen trennten sich spontan.

Die wäßrige Phase wurde nach der Abtrennung der organischen Phase nochmals mit 100 ml frischem Toluol 5 min lang extrahiert. Die Phasentrennung erfolgte spontan. Die organische Phase aus diesem 2. Extraktionsschritt wurde mit der ersten organischen Phase vereinigt.

Die vereinigten organischen Phasen wurden über ein Faltenfilter klar filtriert. Das Filtrat blieb beim Stehenlassen klar.

Aus den vereinigten organischen Phasen wurde das Toluol am Rotationsverdampfer abdestilliert. Dazu wurde die Heizbadflüssigkeit für den Sumpf auf 70°C eingestellt. Der Druck wurde im Verlauf der Destillation langsam auf 5 mbar gesenkt. Nach 45 min wurde ein Druck von 5 mbar bei einer Heizbadtemperatur von 70°C erreicht und anschließend noch 5 min lang gehalten. Anschließend wurde der Sumpf auf Raumtempratur abgekühlt.

Als Destillat wurden 475 ml Toluol erhalten, entsprechend einem Rückgewinnungsgrad von 95 % der Theorie; als Rückstand 47,6 g einer klaren Schmelze mit einem iodometrisch bestimmten DMAB-Gehalt von 98,0 %. Aus dem DMAB-Gehalt und der Auswaage des Rückstandes errechnete sich eine DMAB-Ausbeute von 79,2 % der Theorie.

Das DMAB kristallisierte innerhalb weniger Stunden in einer Kristallisierschale in Form großer strahlenförmig gewachsener Kristalle aus. Der Kristallkuchen wurde im Mörser grob zerkleinert und zur Entfernung von Lösemittelresten 4 Tage lang an der Luft stehengelassen.

Danach wurden folgende Meßgrößen bestimmt:
iodometrisch bestimmter Gehalt: 98,4 %
Schmelzpunktuntergrenze: 33,8 bis 33,9°C
Toluol-Gehalt (UV-Analyse in methanolischer Lösung): <0,083 %
Dimethylammonium-Gehalt (¹H-NMR-Analyse in D₂O-Lösung): 0,1 mol-%
Trübung, 10 %ige wäßrige Lösung: 0,75 FNU
Trübung, Schmelze: 1,5 FNU

Eine 10 %ige wäßrige Lösung des Produkts war klar und zeigte nur einen leichten Film auf der Wasseroberfläche. Auch die Schmelze war klar und zeigte lediglich eine geringe Menge Bodensatz. Der gute visuelle Eindruck wurde durch die niedrigen Trübungswerte (FNU von 0,75 bzw. 1,5) bestätigt.

### Vergleichsbeispiel 1

Nach der in Beispiel 1 beschriebenen Verfahrensweise wurden 81,5 g (1 mol) Dimethylammoniumchlorid in 700 ml Monoglyme mit 38 g (1 mol) Natriumboranat umgesetzt. Im Anschluß an die 3-stündige Zudosierung von Natriumboranat wurde das Reaktionsgemisch über eine feinporige Glasfritte filtriert.

In der Glasfritte blieben trotz guten Auspressens 108 g Filterkuchen zurück. Da selbst bei 100 %igem Umsatz nur 58,4 g Natriumchlorid entstehen konnten, zeigte das gemessene Filterkuchengewicht einen hohen Lösungsmittelgehalt an.

Das Filtrat wurde am Rotationsverdampfer eingeengt. Zum Einengen wurde dieselbe Verfahrensweise gewählt wie für die Destillation von Toluol in Beispiel 1. Maximaltemperatur im Sumpf von 70°C und ein Enddruck von 5 mbar wurden nach ihrem Erreichen 5 min lang gehalten. Die erhaltene trübe DMAB-Schmelze kühlte auf Raumtemperatur ab.

Als Destillat wurden 560 ml Monoglyme erhalten, entsprechend einem Rückgewinnungsgrad von 80 % der Theorie; als Rückstand wurden 45,7 g einer trüben Schmelze mit einem iodometrisch bestimmten DMAB-Gehalt von 93,2 % erhalten. Aus dem DMAB-Gehalt und der Auswaage des Rückstands errechnete sich eine DMAB-Ausbeute von 72,3 % der Theorie.

Das DMAB kristallisierte innerhalb weniger Stunden in einer Kristallisierschale in Form großer strahlenförmig gewachsener Kristalle aus. Der Kristallkuchen wurde im Mörser grob zerkleinert und zur Entfernung von Lösemittelresten 4 Tage lang an der Luft stehengelassen.

Danach wurden folgende Meßgrößen bestimmt:
iodometrisch bestimmter Gehalt; 95,5 %
Schmelzpunktsuntergrenze: 33,2 bis 33,4°C
Dimethylammonium-Gehalt (¹H-NMR-Analyse in D₂O-Lösung): 0,72 mol-%
Trübung, 10 %ige wäßrige Lösung: 7,4 FNU
Trübung, Schmelze: 8,7 FNU

Eine 10 %ige wäßrige Lösung des Produkts war trüb und zeigte einen Film auf der Wasseroberfläche. Auch die Schmelze war trüb. Sie zeigte einen hohen Feststoffanteil, der sich als Bodensatz und als an der Glaswand haftender gelartiger Rückstand bemerkbar machte. Der visuelle Eindruck wurde durch die hohen Trübungswerte (FNU von 7,4 bzw. 8,7) bestätigt.

Eine photometrische Bestimmung des Toluolgehalts in dem Produkt war nicht möglich, da unbekannte Verunreinigungen eine für Toluol untypische starke Absorption im Wellenlangenbereich ≤300 nm hervorriefen.

### Vergleichsbeispiel 2

In der in Beispiel 1 beschriebenen Apparatur wurden 81,5 g (1 mol) Dimethylammoniumchlorid in einem Lösungsmittelgemisch aus 350 ml Monoglyme und 325 ml flüssigem Dimethylamin suspendiert. Über einen Zeitraum von 3 h wurden möglichst gleichmäßig 38 g (1 mol) Natriumboranat zugegeben.

Im Anschluß an die Zudosierung von Natriumboranat wurde das Lösungsmittelgemisch bis zu einer Maximaltemperatur im Sumpf von 60°C sowie zu einem Enddruck von 20 mbar abdestilliert. Die Endwerte von Temperatur und Druck wurden nach 45 min erreicht und danach noch 15 min lang gehalten.

In den abgekühlten Rückstand wurden unter Rühren 400 ml Toluol gegeben. Anschließend wurden zunächst langsam und tropfenweise, später schnell insgesamt 200 ml Wasser zugegeben. Es wurde 5 min lang gerührt und die Phasen trennten sich.

Die wäßrige Phase wurde nach der Abtrennung der organischen Phase nochmals mit 100 ml frischem Toluol 5 min lang extrahiert. Die organische Phase aus diesem 2. Extraktionsschritt wurde mit der ersten organischen Phase vereinigt.

Die vereinigten organischen Phasen waren trübe und wurden deshalb über ein Faltenfilter filtriert. Auch nach der Filtration wurde kein klares Filtrat erhalten.

Das Toluol wurde aus den vereinigten organischen Phasen am Roationsverdampfer abdestilliert. Dazu wurde dieselbe Verfahrensweised gewählt wie für die Toluoldestillation in Beispiel 1. Maximaltemperatur im Sumpf von 70°C und ein Enddruck von 5 mbar wurden nach ihrem Erreichen 5 min lang gehalten. Die erhaltene trübe DMAB-Schmelze wurde auf Raumtemperatur abgekühlt.

Es wurden 44,0 g DMAB als trübe Schmelze mit einem iodometrisch bestimmten Gehalt von 91,0 % erehalten. Aus dem DMAB-Gehalt und der Auswaage der Schmelze errechnete sich eine DMAB-Ausbeute von 67,9 % der Theorie.

Das DMAB kristallisierte innerhalb weniger Stunden in einer Kristallisierschale in Form großer strahlenförmig verwachsener Kristalle aus. Der Kristallkuchen wurde im Mörser grob zerkleinert und zur Entfernung von Lösemittelresten 4 Tage lang an der Luft stehengelassen.

Danach wurden folgende Meßgrößen bestimmt:
iodimetrisch bestimmter Gehalt: 94,8 %
Schmelzpunktsuntergrenze: 32,4 bis 32,6°C
Dimethylammonium-Gehalt (¹H-NMR-Analyse in D₂O-Lösung): 0,36 mol-%
Trübung, 10 %ige wäßrige Lösung: 5,9 FNU
Trübung, Schmelze: 10,5 FNU

Eine 10 %ige wäßrige Lösung des Produkts war trüb und zeigte einen dicken Film auf der Wasseroberfläche, sowie einzelne Flüssigkeitströpfchen. Auch die Schmelze war trüb. Sie zeigte einen hohen Feststoffanteil, der sich als Bodensatz und als an der Glaswand haftender gelartiger Rückstand bemerkbar machte. Der visuelle Eindruck wurde durch die hohen Trübungswerte (FNU von 5,9 bzw. 10,5) bestätigt.

Eine photometrische Bestimmung des Toluolgehalts in dem Produkt wurde nicht durchgeführt, da die Substanz in Methanol nicht klar löslich war.

**Tabelle**

| | Beispiel 1 (erfindungsgemäß) | Vergleichsbeispiel 1 | Vergleichsbeispiel 2 |
|---|---|---|---|
| DMAB-Gehalt (Massen-%) | 98,4 | 95,5 | 94,8 |
| Schmelzpunktsuntergrenze (°C) | 33,8-33,9 | 33,2-33,4 | 32,4-32,6 |
| Dimethylammoniumgehalt (mol-%) | 0,10 | 0,72 | 0,36 |
| Trübung* 10 %ige wäßrige Lösung (FNU) | 0,75 | 7,4 | 5,9 |
| Trübung* Schmelze (FNU) | 1,5 | 8,7 | 10,5 |

| | | | |
|---|---|---|---|
| * Die Trübungsmessungen wurden nach der Methode DIN EN 27027: 1994 durchgeführt. | | | |

Wie aus der Tabelle hervorgeht, übertrifft das erfindungsgemäß hergestellte DMAB die beiden nach dem Stand der Technik synthetisierten Präparate in allen wesentlichen Qualitätsmerkmalen. Besonders die Trübungswerte der 10 %igen wäßrigen Lösung sind so niedrig (<3,5 FNU), daß selbst für die Anwendung im Elektronikbereich keine weitere Reinigung mehr notwendig ist. Darüber hinaus ist das erfindungsgemäße Verfahren einfach durchführbar und preiswert, ohne aufwendige Prozeßschritte.

### Beispiel 2

Nach der in Beispiel 1 beschriebenen Verfahrensweise wurden 81,5 g (1 mol) Dimethylammoniumchlorid in 607 g (700 ml) Monoglyme mit 38 g (1 mol) Natriumboranat umgesetzt. Der Wassergehalt des Dimethylammoniumchlorids betrug 0,6 %, der Wassergehalt des Monoglymes 0,038 %. Im gesamten Ansatz befanden sich vor der Reaktion 0,72 g Wasser. Nach der Aufarbeitung gemäß Beispiel 1 wurden 74,8 % der Theorie an DMAB erhalten. Der DMAB-Gehalt der Schmelze betrug 98,2 %. Nach Auskristallisieren und Trocknen an der Luft zeigte eine 10 %ige wäßrige DMAB-Lösung einen Trübungswert von 1,66 FNU.

### Beispiel 3

Beispiel 2 wurde mit denselben Rohstoffen wiederholt, mit dem einzigen Unterschied, daß ein Monoglyme mit erhöhtem Wassergehalt eingesetzt wurde (0,15 % Wasser). Die Gesamtmenge an Wasser in dem Reaktionsansatz war mit 1,49 g doppelt so hoch wie in Beispiel 2. Nach der Aufarbeitung gemäß Beispiel 1 und 2 wurden 78,2 % der Theorie an DMAB erhalten. Der DMAB-Gehalt der Schmelze betrug 98 %. Die 10 %ige wäßrige Lösung der luftgetrockneten Kristalle zeigte einen Trübungswert von 3,1 FNU.

### Beispiel 4

Nach der in Beispiel 1 beschriebenen Verfahrensweise wurden folgende Rohstoffe verarbeitet:

Zur Synthese:
81,5 g (1 mol) Dimethylammoniumchlorid mit einem Wassergehalt von 0,84 %
38 g (1 mol) Natriumboranat
607 g (700 ml) Monoglyme, aus einen vorhergehenden Experiment zurückgewonnen, durch Zugabe von Wasser auf einen Wassergehalt von 0,3 % eingestellt

Zur Extraktion:
500 ml Toluol, aus einem vorhergehenden Experiment zurückgewonnen, durch Zugabe von Monoglyme auf einen Monoglymegehalt von 11,2 % eingestellt
200 ml Wasser

Es wurden erhalten:
595,7 g Monoglyme mit einem Wassergehalt von 0,11 %, entsprechend einem Monoglyme-Rückgewinnungsgrad von 98,1 %
482 ml Toluol mit einem Monoglymegehalt von 11,7 % und einem Wassergehalt von 0,48 %, entsprechend einem Toluol-Rückgewinnungsgrad von 96,4 %
48,8 g DMAB als klare Schmelze mit einem iodometrisch bestimmten Gehalt von 98,0 %. Aus dem DMAB-Gehalt und der Auswaage der Schmelze errechnete sich eine DMAB-Ausbeute von 81,1 % der Theorie. Die 10 %ige wäßrige Lösung der luftgetrockneten DMAB-Kristalle zeigte einen Trübungswert von 3,1 FNU.

## Patentansprüche

1. Verfahren zur Herstellung von Dimethylaminboran durch Umsetzung von Natriumboranat mit einem Dimethylammoniumsalz in Monoethylenglykoldimethylether als Lösungsmittel, dadurch gekennzeichnet, daß nach der Umsetzung der Monoethylenglykoldimethylether aus dem Reaktionsgemisch vollständig abdestilliert und ohne weitere Behandlung wieder eingesetzt wird, der Destillationsrückstand mit Wasser und einem wasserunlöslichen, organischen Extraktionsmittel oder Extraktionsmittelgemisch aufgenommen und vermischt wird, die organische Phase anschließend von der wäßrigen Phase getrennt und eingedampft wird, wobei als Rückstand sehr reines Dimethylaminboran und als Destillat ein wiedereinsetzbares Extraktionsmittel oder Extraktionsmittelgemisch erhalten werden.

2. Verfahren gemäß Anspruch 1, dadurch gekennzeichnet, daß dem Reaktionsgemisch bestehend aus Dimethylammoniumsalz, Natriumboranat und Monoethylenglykoldimethylether zusätzlich 0,001 bis 1 mol, bevorzugt 0,01 bis 0,5 mol Wasser pro mol Natriumboranat zugesetzt werden.

3. Verfahren gemaß einem oder mehreren der Ansprüche 1 bis 2, dadurch gekennzeichnet, daß Dimethylammoniumacetat oder Dimethylammoniumchlorid als Dimethylammoniumsalz eingesetzt werden.

4. Verfahren gemaß einem oder mehreren der Ansprüche 1 bis 3, dadurch gekennzeichnet, daß das Dimethylammoniumsalz in reiner, unverdünnter Form zum Reaktionsgemisch gegeben wird.

5. Verfahren gemäß einem oder mehreren der Ansprüche 1 bis 4, dadurch gekennzeichnet, daß das Dimethylammoniumsalz durch Vereinigung stöchiometrischer Mengen an Dimethylamin und wasserfreier Säure in Monoethylenglykoldimethylether als Lösungsmittel hergestellt wird und ohne weitere Behandlung mit Natriumboranat zu Dimethylaminboran umgesetzt wird.

6. Verfahren gemäß einem oder mehreren der Ansprüche 1 bis 5, dadurch gekennzeichnet, daß pro mol eingesetztem Natriumboranat bevorzugt 300 bis 1000 ml Monoethylenglykoldimethylether als Lösungsmittel eingesetzt werden.

7. Verfahren gemäß einem oder mehreren der Ansprüche 1 bis 6, dadurch gekennzeichnet, daß die Umsetzung von Natriumboranat mit dem Dimethylammoniumsalz bevorzugt bei einer Temperatur von 20 bis 60°C durchgeführt wird.

8. Verfahren gemäß einem oder mehreren der Ansprüche 1 bis 7, dadurch gekennzeichnet, daß als Extraktionsmittel eine nicht wassermischbare, organische Flüssigkeit aus der Gruppe der aromatischen oder halogenierten Kohlenwasserstoffe, der Ether oder der Carbonsäureester eingesetzt wird.

9. Verfahren gemäß einem oder mehreren der Ansprüche 1 bis 8, dadurch gekennzeichnet, daß als Extraktionsmittelgemisch ein Extraktionsmittel gemäß Anspruch 8 im Gemisch mit einer weiteren organischen Flüssigkeit, bevorzugt Monoethylenglykoldimethylether, eingesetzt wird.

10. Verfahren gemäß Anspruch 9, dadurch gekennzeichnet, daß das Extraktionsmittelgemisch bis zu 20 Massenprozent Monoethylenglykoldimethylether enthält.

11. Verfahren gemäß einem oder mehreren der Ansprüche 1 bis 10, dadurch gekennzeichnet, daß zur Extraktion pro mol Boranat 150 bis 300 ml Wasser zusammen mit dem 2,5-fachen Volumen an Extraktionsmittel oder Extraktionsmittelgemisch eingesetzt werden.
